# EUROPEAN PATENT APPLICATION

(11) **EP 1 947 327 A1**
(43) Date of publication of application: **23.07.2008**
(21) Application number: 06708874.0
(22) Date of filing: 13.02.2006
(51) Int. Cl.: F03B 13/18

(54) **ELECTRICAL POWER STATION FOR THE EXTRACTION OF ENERGY FROM SWELLS**

(30) Priority: 14.02.2005 ES 200500360
(71) Applicant: Hidroflot, S.L., 08106 Santa Maria de Martorelles (ES)
(72) Inventor: PRATS CANOS, Ricardo, E-08106 Santa Maria De Martorelles (ES); PRATS JOVE, Felipe, E-08017 Barcelona (ES)
(74) Representative: Ponti Sales, Adelaida
(86) International application number: PCT/ES2006/000056
(87) International publication number: WO 2006/084935

(57) **Abstract**

Electrical power station for the extraction of energy from swells, comprising a production unit, or a plurality of units joined together, in which a buoy (1) floats in the water and it is supported by submerged floating bells (4), which exert an upward push when the flood chamber (5) is drained with pressure air, which supports it to the desired height, through anchorage chains (25) that prevent it to ascend, and in that the assembly can be submerged in view of storms or unforeseen events, and in that the base (4) is working submerged. The unit can be optimized for working in high and low swells by optionally attaching ballast (2) to the buoy (1) .

## Description

### OBJECT OF THE INVENTION

The present invention refers to a system for the generation of electrical energy coming from swells, whose power station is submerged for the extraction of the energy; because of its condition it is little affected by storms, due to the depth of its placement, the waves do not reach the violence of a storm.

### STATE OF THE ART

There are systems for the generation of electrical energy coming from swells, whose conceptual variants represent a great diversity and variety in how much and how the energy is extracted, are known.

One of the inventions filed by the same inventor consists of a floating electrical power station for the extraction of the energy from swells, which in addition submerges, whose innovations are considered well-known in the Spanish patent P200100902 (granted).

Considered the studied adversities of the method of extraction of the energy that is used to date, gaps are observed that make determine more suitable constructions, for the protection against heavy or rough sea, and little height waves or calm sea, with constructive means that can withstand with more rigor the inclemency of the storms, and adaptations of floaters for the extraction of energy more suitable to both types of sea (heavy and calm sea), extending the production hours before taking decisions of power stop to safeguard the power station, or to increase the yield in the case of seas with little height waves.

Therefore, it is necessary to reconsider forms and methods of present utility, which guarantee with greater fidelity to obtain a more profitable energy and suitable structural forms that are essential to adapt to the necessities of the present market with the new technologies, with more hours of annual production.

One of the innovations which is reason for study of this innovation is the condition of an electrical power station working in immersion, and to place a power station for the generation of energy by swell, where the waves, submarine currents and the storms are present in greater dimension, but they will not affect its operation until certain and extreme conditions.

### DESCRIPTION OF THE INVENTION

The present invention tries to solve a plurality of disadvantages observed and been able to be innovated in the study of the present invention as claimed in claim 1. Embodiments of the invention are described in the dependent claims.

The object of the invention is the construction of a submerged electrical power station for the extraction of energy coming from the waves of the sea, whose particularities are well-known as far as it can be constructed from unitary form of a single producing element or a plurality of linked elements, as it is demonstrated below.

The fundamental concept of the invention is to place a floating bell in the sea, anchored by its lower part to the bottom, and to take advantage of the Archimedes Principle, whose difference of added loads and weights always control the floating bell that is anchored to the bottom and, to have several anchorage points around it to prevent their movement, and that the ascending effort of the movement of the water that occupies is always making a upwards push very superior to the water that evacuates and is submerged and immobilized at depths between 20/30 meters where the storm loses its force, permanently doing the effort to emerge, whose floating bell produces a stable reference point that does not follow the swell, nor the tides, and resists immovable to the submarine currents, and its movement with respect to the surge is as little as possible, regardless the inclemency of the swell, creating some stability and independent immobility of the swell that is seen in the upper part of the column protruding from the water, in whose column a buoy is moved of preset features, which follow the movement of the swell, creating a potential difference between the stable body which is anchored, and the floating body of the buoy which generates the electrical energy that follows the movement of the waves of the sea through its displacement along the support column, whose kinetic energy is used for the extraction of the potential energy.

A second adaptation of extension according to which is disclosed above, is the possibility of grouping a plurality of buoys following the same principle just described, converting the occupation in more m2 of water with the pertinent adaptations, agglutinating a energy producing centre which is structured with the adaptation of the same elements as described, but with smaller proportional investment of materials, due to the advantage of the submarine pieces, floating bells submerged and, existing chains, increasing by physical deposition the number of sliding buoys, with the increase of the energy producing machines.

Another preference of the invention is to provide that the power station can be sunk up to the bottom when appear storms which can lead the destruction of the elements, whose adaptation of materials must be considered because they are particularities that determine the invention, and that they are remarkable, e.g. the compressed air equipment to increase the pressure of the place before an immersion.

The columns which form part of the invention begin the assembly in the upper zone of the floating bell and preferably protrude from the water surface above the maximum historical height the waves of the place and tides, therefore, in the upper part of the columns there are closings of watertight hatch or opened to maintain the atmospheric pressure inside them, with automatic closing devices, for certain moments of flood.

So that the submerged electrical power station can fulfil whichever variants are demanded, it must be provided with high pressure compressed air means for blowing, venting and flooding, which is not a novelty of the present invention, we must consider prior art systems can be adapted, which are not described here, and it is just cited as information.

For the anchorage there are passages for a chain inside the floating bell, those chain passages comprise stiffness elements for mooring, and they are used when the power station is located at the height of suitable bottom, so that its placement allows the regulation from the surface, to obtain the preferred bottom, with the possibility of being able to release the chain according to the claims.

The present invention tries to solve the disadvantage that appears when energy of the swell with low yield, called "curly" swell sea and "slight sea", which are waves of very low content of kinetic energy, and with a buoy ballast with an additional weight, with this type of sea, moves very slowly based on the lost of potential energy during the ascent, as is claimed in the pertinent claims.

Therefore, with the suitable adaptations is due to obtain the maximum yield in a sea with low energy swell, but simultaneously, to be able to extract the maximum energy when the sea passes to great energy waves, such as "heavy" sea or "very heavy" sea.

Still another object of the invention, whose novelty comprises the idea to have a floating "production buoy" that can release its ballast when it is necessary, take advantage of the conceptual partners Archimedes and Newton, the first when ascends with slight load that allows the production buoy to feel more free, without additional load with low energy sea, doing the effort of electrical generation for the only potential conversion with the load during the ascent, releasing the descent without production of electrical energy, and the second when the floater is ballasting for harder seas, and the potential energy generation will be able to be obtained in both senses, upwardly and downwardly.

It must also be pointed out that the immersion manoeuvre is well-known by the same inventor of the granted patent ES-200101372. We make the observation because the new generation buoy of ellipsoid sphere shape, composed by a plurality of detachable segments to be able to be manipulated, will be able to submerge. This manoeuvre is used to loosen or to collect the ballast that will be deposited at the base of the buoy and the ballast support, which is guided by the column.

It is pointed out in the invention that the added ballast will be able to be of several types and proportions, being the more accepted to be claimed, the type of the independent cylinders, with spherical ends, or just spheres.

### BRIEF DESCRIPTION OF THE FIGURES

Some devices will be now described which characterize the invention, just as example, with reference to the attached drawings, in which:
Fig. 1 is a diagrammatical elevation view which shows the physical shape of a production unit with the buoy and the column that serves as a guide of the sliding buoy, and chain passage for anchorages;
Fig. 2 is also an elevation view which shows the assembly of a plurality of production and support buoys, where it is represented the formation of a compact production unit with greater number of columns and production buoys joined together, in several positions with and without ballast;
Fig. 3 is a plan view of the structural support where the columns rest and the floating bells of floating support of the power station support.

### DESCRIPTION OF A PREFERRED EMBODIMENT

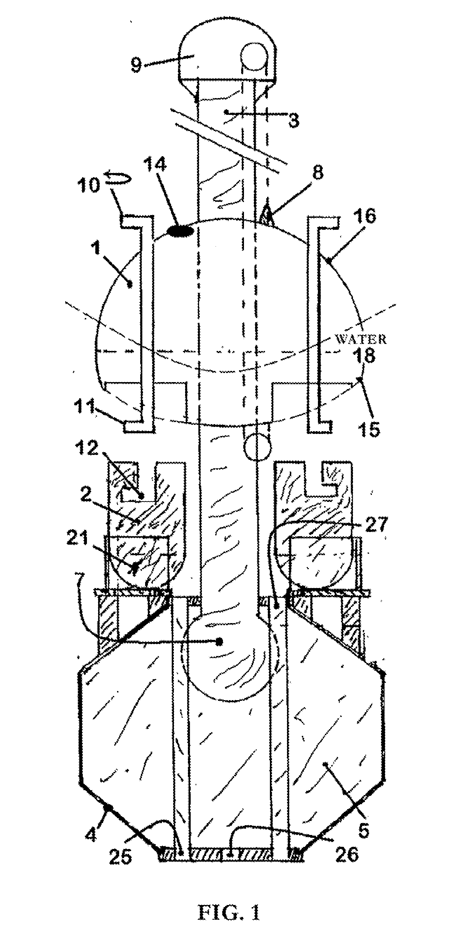

With reference to Fig. 1, diagrammatically illustrated, a unitary assembly is shown, which comprises a floating bell 4, whose inner part 5 is used for flood when it is due to go to the bottom of the sea and to escape from a storm, the flood water enters by a permanent opening 26, which is also used to expel the water when it is blown to emerge.

The anchorage berth chains slide along the joining tube with an entrance 27 and an exit 25, once placed in the sea the chains, they are fixed by the links in the upper part of 27 to hold firmly.

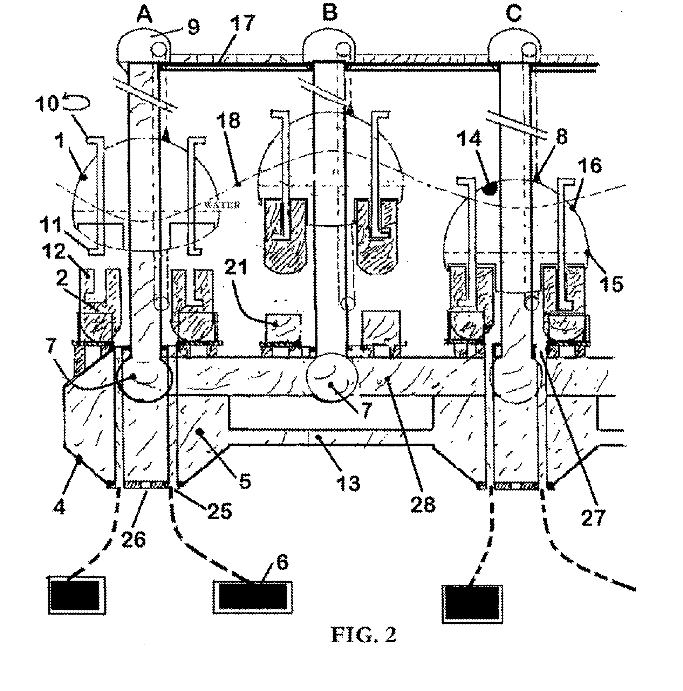

Also in Fig. 1, the floating bell 4, the free space 5 can be seen, will stay to pressure at the place where it is and it will be flooded for an immersion, releasing water when it is blown and the water from 5 will be emptied, and 13, of Fig. 2.

The column 3, that reaches the surface during the production, is where buoy 1 slides following the swell, whose load or ballast 2, additional, could be of diverse structural forms, whose sockets 11, adapt perfectly in the ballast 2, when it is released by a desired immersion with a turn of 90° of 10, in position from 11, providing the buoy to work with or without ballast.

In the same Fig. 1 and for the production of the electrical energy it is demonstrated that with the movement of buoy 1, it drags the sling 8, transmitting the potential energy to the machines placed at 9.

Fig. 2 demonstrates a diagrammatical elevation view and in the same constructive form, an assembly of several sphere units 7 forming a set of structural rigidity, for a plurality of elements joined according to what is claimed in claim 1. The integral structure 13, and 17, and the columns 3, join the support floating bell 4, with the structural joining 28 that joins the bell buoys or a plurality of them, and the columns 3, which start from the spheres 7, which form the tight seal with the column 3, and others form mechanical rigidity from the joining of 28, 13 and 17.

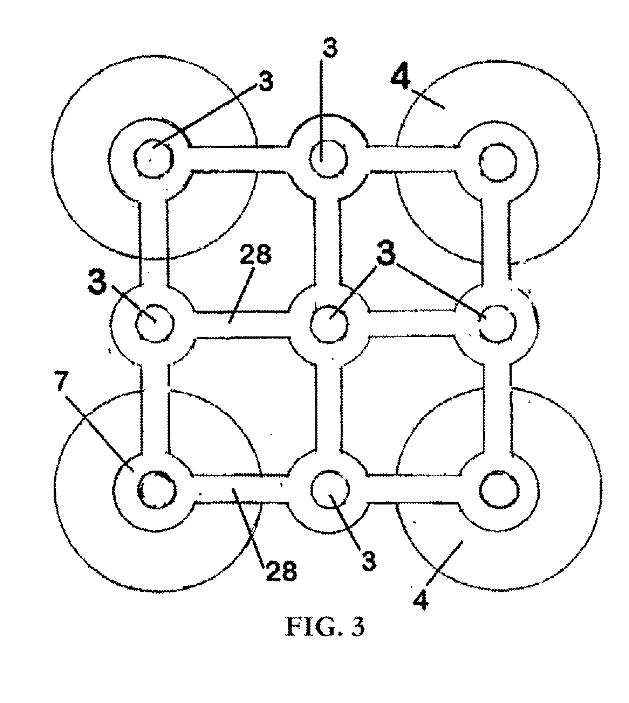

As reference to what is illustrated and seen in a plan view, e.g. in Fig. 3, the joining of the columns 3 can be seen, and the three supporting spheres 7, which serve as support and structural joint for the columns 3, and joints 13, and 17, that form the firm body of the whole joint, that has man passage inside it, and it communicates with the whole structure.

As stated above, in Fig. 2 is clearly shown that the pieces of ballast 2 can be released or can be taken, in all the examples that appear in Fig. 2, whose novelty comprises two independent pieces which are joined to form a single body in front of the imperative of the existing sea.

In Fig. 2 are also shown three different figures to take the ballast joined to the floater; A, floater raised with the ballast in the pedestal; B, floater ballast following the swell with the ballast; C, floater submerged taking or loosen the ballast.

The embodiments and examples described in this specification are presented as the best explanation of the present invention and its practical application, and to allow the persons skilled in the art to carry out and use the invention. However, the person skilled in the art will recognize that the previous description and above examples have been shown just as example. The description as is not destined to being exhaustive or to limit the invention to the described precise form. Many modifications and variations are possible to the light of previous disclosure without departing from the scope of the appended claims.

## Claims

1. Electrical power station, which is submerged for the extraction of energy from the sea swell, whose particularities are marked, **characterized in that** can be constructed from unitary form of a single producing element or a plurality of joined elements, whose versions being equal, are related with small differences, conserving the same philosophy of power production according to Fig. 1 and 2, whose independent unit of Fig. 1, with a floating bell (4) is used to support a structure and a sliding column (3) that serves as sliding guide of the buoy (1) producing energy (1) in both Fig. 1 and 2.

2. Submerged electrical power station for the extraction of energy from the sea swell according to claim 1, **characterised in that** the fundamental idea of the invention in Fig. 1 and 2 is to place a floating bell (4) is anchored in the sea, which is submerged to depths between 20 and 30 meters and supports a sliding column (3) whose height is > 30 meters, and emerges in surface.

3. Submerged electrical power station for the extraction of energy from the sea swell according to claim 2, **characterised in that** the submerged floating bells in Fig. 1 and 2, which carry the mechanical structure (28) in general (28), exert a permanent push towards the surface causing a immobility controlled through the anchorage chains which pass through orifices (25), that are regulated by mooring and anchorage height, and they rest and are fixed to an entrance (27), and can be flooded, submerged, and recovered from the marine bottom.

4. Submerged electrical power station for the extraction of energy from the sea swell according to claim 2, **characterised in that** in Fig. 2, it comprises a plurality of floating bells (4) provided with columns (3), comprising a mechanical structure (7, 13, 17), increasing the number of columns in a plurality, to support the floating bell (4) that it increases in function of the amount of elements used by occupation of m2 of water, whose energy production machines can be found in the surface or inside the joining spheres (7) with atmospheric pressure, or can support environmental pressurization with tight closing elements to avoid floods.

5. Submerged electrical power station for the extraction of energy from swell, according to claim 1; **characterized in that** the buoys (1) which extract the energy from the waves, can do without the ballast (2) and deposit to their support (21), or can take, for better extraction with sea with a certain swell.

6. Submerged electrical power station for the extraction of energy from swell, according to claim 5; **characterized in that** the ballast can be of very diverse forms according to Fig. 2, shown in A, B, C, and **in that** it can loosen or recovered by mechanics means (10), (11), (12).

7. Submerged electrical power station for the extraction of energy from the sea swell according to claim 1, **characterised in that** the floating bell (4) uses a camera (5) to be flooded to be placed or submerged in view of a regulation or flood, through the entrance or exit of water (26).

8. Submerged electrical power station for the extraction of energy from the sea swell according to claim 5, **characterised in that** the buoy (1) has a sphere shape (16) in the upper part, and ellipsoid (15) in the lower part.

9. Submerged electrical power station for the extraction of energy from the sea swell according to claim 4, **characterised in that** it is structured in a tubular support (28) of symmetrical shape that joins the spherical elements (7), that provide mechanical rigidity forming a single tight rigid piece (28), where the components of the bell buoys (4) are joined, whose result forms a joined piece, where the columns (13) and all the structure assembly is a single piece.

10. Submerged electrical power station for the extraction of energy from swells, according to claim 9; **characterized in that** the number of assembled components is not limited, and **in that** the elements of the support structure (28) can be used for man passage.
